(19) Europäisches Patentamt
European Patent Office
Office européen des brevets

(11) **EP 1 488 838 A1**

(12) **EUROPEAN PATENT APPLICATION**
published in accordance with Art. 158(3) EPC

(43) Date of publication:
**22.12.2004 Bulletin 2004/52**

(51) Int Cl.⁷: **B01D 9/04**, C13F 1/00

(21) Application number: **03743020.4**

(86) International application number:
**PCT/JP2003/001903**

(22) Date of filing: **21.02.2003**

(87) International publication number:
**WO 2003/072216 (04.09.2003 Gazette 2003/36)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **27.02.2002 JP 2002051075**

(71) Applicants:
• **Shirai, Yoshihito
  Iizuka-shi, Fukuoka 820-0054 (JP)**
• **Wakisaka, Minato
  Kitakyushu-shi, Fukuoka 808-0135 (JP)**

(72) Inventors:
• **Shirai, Yoshihito
  Iizuka-shi, Fukuoka 820-0054 (JP)**
• **Wakisaka, Minato
  Kitakyushu-shi, Fukuoka 808-0135 (JP)**

(74) Representative:
**Reitstötter - Kinzebach & Partner (GbR)
Patentanwälte
Sternwartstrasse 4
81679 München (DE)**

(54) **PROCESS FOR PRODUCING CONCENTRATE BY FREEZING AND THAWING AND APPARATUS THEREFOR**

(57) A process for producing a concentrate wherein a target component concentrate is obtained with low cost and in a simple manner from a solution containing a target component and unneeded suspended solid contents while unneeded suspended solid contents are removed. In particular, the process is one for obtaining a concentrate of first component from a solution containing a first component, which comprises a step of rapidly freezing the above solution to thereby obtain a frozen matter, a step of thawing all the frozen matter relatively slowly, and a first recovery step of recovering an initially thawed fraction obtained in the initial stage of thawing to thereby obtain a concentrate of first component.

Fig. 1

**Description**

TECHNICAL FIELD

The present invention relates to a process for producing, by use of a freezing step and a thawing step, a concentrate of a component A from a solution X that contains the component A. In particular, the present invention relates to a process for easily removing a suspended solid content B and thereby producing a concentrate by use of a freezing step and a thawing step in the case where the suspended solid content B is contained in the solution X.

BACKGROUND ART

There exist various solutions X, each of that dissolves a component A and contains a suspended solid content B. Examples thereof may include liquid foodstuffs, wastes such as sludge and the like. In order to obtain a concentrate of a target component A from such a solution X, water, and if necessary the suspended solid content, have to be removed. Thus, to obtain a concentrate of a target component A from a certain solution X is a useful technique from the following viewpoints: 1) a volume of the solution decreases; and 2) the solution can be stabilized due to the removal of the suspended solid content that is an unneeded matter, and that is expected to apply for various industries such as food industry, environmental industry, pharmaceutical industry and chemical industry.

At present, concentration processes such as a) a vaporization process, b) a membrane concentration process and c) a freeze concentration process may be used as the technique for obtaining such a concentrate.

The vaporization process a) comprises a process of vaporizing water, as the name shows. However, there are many disadvantages: large amount of energy is used; quality of a component of a concentrate is deteriorated due to heating; and residues obtained in a vessel have to be treated after the vaporization, in case where a lot of suspended solid content is contained in the solution.

Further, the membrane concentration process b) comprises a process of concentrating by use of a membrane, as the name shows. However, there are also many disadvantages: when the membrane is fouled, it is necessary to replace it, resulting in high costs; and the possibility to foul the membrane is higher, resulting in high costs in case where a lot of suspended solid content is contained in the solution.

The freeze concentration process c) comprises a process in which a solution is partially frozen to remove water in the form of ice and thereby to obtain a concentrate. According to the process, a concentrated solution having high quality can be obtained. However, in the freeze concentration process, in order to easily separate a concentrated solution and ice, operation conditions and/or a structure of an apparatus becomes complicated to result in high costs; accordingly, it does not enjoy the prevalence.

More, in the freeze concentration process c), there is another problem: as a solution to be treated is highly concentrated, it becomes higher in the viscosity, and it becomes difficult to separate the concentrated solution and the ice; that is, there is a limit in the concentration in the freeze concentration process c).

Still another process may be d) a coagulation and precipitation process comprising a step of injecting chemicals. The coagulation and precipitation process d) is generally used, when a suspended solid content is removed from the sludge and the like. However, from viewpoints of the cost of the chemicals and the environmental contamination, it cannot be said as the best process.

DISCLOSURE OF INVENTIO

An object of the present invention is to solve the above-mentioned problems of conventional concentration processes such as vaporization process a), membrane concentration process b), freeze concentration process c), or coagulating and precipitation process d).

Specifically, an object of the present invention is to provide a process of producing a concentrate at reduced costs and with ease.

Further, an object of the present invention is to provide, other than or in addition to the above object, a process of producing a concentrate with which a suspended solid content can be easily removed, in case where a solution to be treated contains a suspended solid content, in particular, contains much.

More, an object of the present invention is to provide, other than or in addition to the above object, a concentrate obtained according to the above producing process, in particular, a concentrate having high quality, which is obtained according to a low cost producing process.

The present inventors found that the above problems can be solved by the following inventions. In particular, the inventors have found that by applying a freezing and thawing process the problems can be solved.

<1> A process for producing a concentrate in which the concentrate of a first component is obtained from a solution containing the first component, comprising:

a freezing step of quickly freezing the solution to obtain a frozen mass;
a thawing step of thawing the whole of the frozen mass at a thawing rate $V_{melt}$ (g/min) that satisfies the following formula 1 (wherein A means a surface area ($cm^2$) of the frozen

mass); and
a first recovering step of recovering an initially thawed fraction obtained at an initial thawing stage, thereby to obtain the concentrate of the first component:

$$(A/170) > V_{melt} \qquad \text{Formula 1.}$$

<2> A process for producing a concentrate in which the concentrate of a first component is obtained from a solution containing the first component, comprising:

a freezing step of quickly freezing the solution to obtain a frozen mass;
a thawing step of thawing the whole of the frozen mass during a time T (min) that satisfies the following formula 2 (wherein A means a surface area ($cm^2$) of the frozen mass and W means a weight (g) of the frozen mass); and
a first recovering step of recovering an initially thawed fraction obtained at an initial thawing stage, thereby to obtain the concentrate of the first component:

$$T > 170 \ (W/A) \qquad \text{Formula 2.}$$

<3> A process for producing a concentrate in which the concentrate of a first component is obtained from a solution containing the first component, comprising:.

a freezing step of quickly freezing the solution to obtain a frozen mass;
a thawing step of thawing the whole of the frozen mass over 1 hr or more; and
a first recovering step of recovering an initially thawed fraction obtained at an initial thawing stage, thereby to obtain the concentrate of the first component.

<4> In any one of the above items <1> to <3>, the process further comprise, before the freezing step, a solid content removing step of removing a solid content from the solution. The solid content removing step may be preferably carried out by use of a process such as centrifugal separation, filtration (such as membrane filtration), or chromatography separation. As described hereinafter, in case where the process according to the present invention is regarded as one set, when the set is repeated plural times (that is, the present invention is carried out in multi-stage), the solid content can be removed in a first set or in an initial stage including the first set. Accordingly, as the solid content removing step, the first set or a plurality of sets including the first set according to the present invention may be used.
<5> In any one of the above items <1> to <4>, the process may further comprise a second recovering step of dividing a thawed solution other than the initially thawed fraction into a middle thawed fraction that has a concentration substantially same as that of the first solution and a finally thawed fraction that is diluted more than the first solution and thereby to recover.
<6> In any one of the above items <1> to <5>, a concentration of the initially thawed fraction may be preferably 1.3 times or more than that of the first component in the solution having the first component, and/or an amount of the first component in the initially thawed fraction, when an amount of the first component contained in the solution that contains the first component is taken as 100, may be preferably 100/4 or more.
<7> In any one of the above items <1> to <6>, the first recovering step and/or the second recovering step may be preferably carried out by a) monitoring a concentration of a thawed solution and/or b) sampling a given amount thereof.
<8> In any one of the above items <1> to <7>, the initially thawed fraction, the middle thawed fraction and/or the finally thawed fraction may be used as the solution containing the first component.
<9> In any one of the above items <1> to <8>, the initially thawed fraction and the middle thawed fraction may be used as the solution containing the first component.
<10> In any one of the above items <1> to <9>, the middle thawed fraction and the finally thawed fraction may be used as the solution containing the first component.
<11> In any one of the above items <1> to <10>, the initially thawed fraction may be used as the solution containing the first component.
<12> In any one of the above items <1> to <11>, the middle thawed fraction may be used as the solution containing the first component.
<13> In any one of the above items <1> to <12>, the finally thawed fraction may be used as the solution containing the first component.
<14> In any one of the above items <1> to <13>, the process may further comprise a step of recovering the first component contained in at least one fraction selected from the initially thawed fraction, the middle thawed fraction and the finally thawed fraction through a physicochemical means and/or a step of clarifying the at least one fraction.
<15> In the above item <14>, the physicochemical means may be at least one process selected from the group consisting of vaporization, crystallization, membrane separation and electrodialysis.
<16> In any one of the above items <1> to <15>, the process may further comprise a separating and recovering step of separating and recovering a suspended solid content contained in the solution from a thawed solution during and/or after the thawing step.

<17> In the above item <16>, a solid content separator may be placed downstream where the suspended solid content and/or the thawed solution are/is generated from the frozen mass, in the separating and recovering step.

<18> In the above item <16> or <17>, the separating and recovering step may be carried out before the first recovering step and/or the second recovering step.

<19> In any one of the above items <16> to <18>, the solid content separator may be at least one selected from the group of filtration apparatus, filter and mesh.

<20> In any one of the above items <16> to <19>, the process further comprise a step of physicochemically treating and/or biologically treating the suspended solid content obtained in the separating and recovering step to recover a substance contained in the suspended solid content.

<21> In any one of the above items <1> to <20>, a latent heat and/or sensible heat generated in the thawing step may be utilized as an energy for the process described in any one of the above items <1> to <20>, or another energy source.

<22> A concentrate of a first component produced by the process described in any one of the above items <1> to <21>.

<23> A concentrate producing apparatus for obtaining a concentrate of a first component from a solution containing a first component, comprising:

a freezing means for quickly freezing the solution to obtain a frozen mass;
a thawing means for thawing the whole of the frozen mass at a thawing rate $V_{melt}$ (g/min) that satisfies the following formula 1 (wherein A means a surface area (cm$^2$) of the frozen mass); and
a first recovering means for recovering an initially thawed fraction that is obtained at an initial thawing stage, and thereby obtaining a concentrate of the first component:

$$(A/170) > V_{melt} \qquad \text{Formula 1.}$$

<24> A concentrate producing apparatus for obtaining a concentrate of a first component from a solution containing the first component, comprising:

a freezing means for quickly freezing the solution to obtain a frozen mass;
a thawing means for thawing the whole of the frozen mass within a time T (min) that satisfies the following formula 2 (wherein A means a surface area (cm$^2$) of the frozen mass and W means a weight (g) of the frozen mass); and
a first recovering means for recovering an initially thawed fraction that is obtained at an initial thawing stage, and thereby obtaining a concentrate of the first component:

$$T > 170(W/A) \qquad \text{Formula 2.}$$

<25> A concentrate producing apparatus for obtaining a concentrate of a first component from a solution containing the first component, comprising:

a freezing means for quickly freezing the solution to obtain a frozen mass;
a thawing means for thawing the whole of the frozen mass over 1 hr or more; and
a first recovering means for recovering an initially thawed fraction that is obtained at an initial thawing stage, and thereby obtaining a concentrate of the first component.

<26> In any one of the above items <23> to <25>, the apparatus may further comprise a solid content removing means for removing a solid content from the solution containing the first component, upstream of the freezing means. The solid content removing means may preferably be a centrifugal separation means, a filtration means (filtration apparatus such as membrane filtration), or a chromatography separation means. When the apparatus comprises the solid content removing means, the solution, in which the solid content is entirely or partially removed from the solution having the first component, may be subjected to the freezing means. As described hereinafter, in case where the process according to the present invention is regard as one set, when the set is repeated plural times (that is, the present invention is carried out in multi-stage), the solid content can be removed in a first set or in an initial stage including the first set. Accordingly, as the solid content removing means, the apparatus according to the present invention may be used.

<27> In any one of the above items <23> to <26>, the first recovering means may further comprise a second recovering means for dividing a thawed solution other than the initially thawed fraction into a middle thawed fraction that has a concentration substantially same as that of the first solution and a finally thawed fraction that is diluted more than the first solution and thereby to recover.

<28> In any one of the above items <23> to <27>, the concentration of the initially thawed fraction may be preferably 1.3 times or more than that of the first component of the solution having the first component, and/or an amount of the first component in the initially thawed fraction, when an amount of the first component contained in the solution that contains the first component is taken as 100, may be preferably 100/4 or more.

<29> In any one of the above items <23> to <28>, the first recovering means and/or the second recovering means may preferably comprise a) a monitoring means for monitoring a concentration of a thawed solution and/or b) a sampling means for sampling a given amount thereof.

<30> In any one of the above items <23> to <29>, the initially thawed fraction, the middle thawed fraction and/or the finally thawed fraction may be used as the solution containing the first component.

<31> In any one of the above items <23> to <30>, the initially thawed fraction may be used as the solution containing the first component.

<32> In any one of the above items <23> to <30>, the middle thawed fraction and/or the finally thawed fraction may be used as the solution containing the first component.

<33> In any one of the above items <23> to <30>, the middle thawed fraction may be used as the solution containing the first component.

<34> In any one of the above items <23> to <30>, the finally thawed fraction may be used as the solution containing the first component.

<35> In any one of the above items <23> to <34>, the apparatus may further comprise a third recovering means for recovering the first component contained in at least one kind of fraction selected from the initially thawed fraction, the middle thawed fraction and the finally thawed fraction through a physicochemical means, and/or a clarifying means for clarifying the at least one kind of fraction.

<36> In the above item <35>, the physicochemical means may be at least one selected from the group consisting of vaporization, crystallization, membrane separation and electrodialysis.

<37> In any one of the above items <23> to <36>, the apparatus may further comprise a separating and recovering means for separating and recovering a suspended solid content contained in the solution from a thawed solution.

<38> In the above item <37>, the separating and recovering means, wherein the separating and recovering means may be a solid content separator which may be at least one selected from the group consisting of a filtration apparatus, filter and mesh, may be placed downstream where the suspended solid content and/or the thawed solution are/is generated from the frozen mass:

<39> In the above item <37> or <38>, the separating and recovering means may be placed upstream of the first recovering means and/or the second recovering means.

<40> In any one of the above items <37> to <39>, the apparatus further comprise a forth recovering means for physicochemically treating and/or biologically treating the suspended solid content obtained by the separating and recovering means to recover a substance contained in the suspended solid content.

<41> In any one of the above items <23> to <40>, a latent heat and/or sensible heat generated by the thawing means may be utilized as an energy for the apparatus described in any one of the above items <23> to <40>, or another energy source.

BRIEF DESCRIPTION OF DRAWINGS

Fig. 1 is a diagram showing one embodiment of an apparatus according to the present invention.
Fig. 2 is a graph showing a concentration ratio of a thawed solution according to example 8 of the present invention.

PREFERRED EMBODIMENTS FOR CARRYING OUT THE INVENTION

The present invention will be described in detail hereinafter.

A process according to the present invention is a process for producing a concentrate, wherein a concentrate of a first component is obtained from a solution containing the first component. The process comprises a freezing step of quickly freezing the solution to obtain a frozen mass; a thawing step of relatively slowly thawing the whole of the frozen mass; and a first recovering step of recovering an initially thawed fraction obtained at an initial thawing stage, thereby obtaining a concentrate of the first component.

Further, the process according to the present invention may further comprise a separating and recovering step for separating and recovering a suspended solid content contained in the solution from a thawed solution to recover. The separating and recovering step of the suspended solid content will be described hereinafter.

More, the process according to the present invention may further comprise, before the freezing step, a solid content removing step for removing a solid content from the solution having the first component. The solid content removing step may be carried out by processes such as centrifugal separation, filtration (such as membrane filtration) or chromatography separation. Furthermore, as mentioned hereinafter, in case where the process according to the present invention is regarded as one set, when the set is repeated plural times (that is, the present invention is carried out in multi-stage), the solid content can be removed in a first set or in an initial stage containing the first set. Accordingly, as the solid content removing step, the first set or a plurality of sets including the first set according to the present invention may be used. When the present invention comprises the solid content removing steps, the present invention can provide a concentrate having higher concentration.

A solution that is a target in the process according to the present invention has a first component. The first component is a component that is a target during the concentration.. The first component as used herein means not only one kind of component but also a group'of two or more components.

In the process according to the present invention, a solution having a first component, that is a target, is subjected to a quick freezing step in which the solution is quickly frozen. In the freezing step, difference of a freezing point of the solution containing the first component and an actual freezing temperature, that is, a degree of supercooling is 0.2°C or more, preferably 1°C or more. Specifically, although in the freezing step, the freezing point depends on the first component and an amount thereof, the solution having the first component is preferably placed at about -80°C that may be provided by a deep freezer or at about -200°C that may be provided by liquid nitrogen. As mentioned above, before the freezing step, the process according to the present invention may comprise the solid content removing step where the solid content is removed from the solution having the first component.

Next, a frozen mass obtained in the freezing step is subjected to the thawing step. The thawing step may be relatively slowly carried out on the basis of the following mechanism. That is, in general, when a solution (including a solution that contains a suspended solid content) is frozen, ice crystal is grown only from pure water molecules. A structure within a frozen mass becomes dotted with ice crystals and high concentration portions where other components are concentrated. A structure of such a frozen mass, whatever freezing process is taken, for example, even in the freezing process according to the above freezing step, is considered to be similar mechanism. When thus obtained frozen mass is relatively slowly thawed, the ice in the surroundings of the high concentration portion can begin to thaw and can thaw out a high concentration component at an initial stage, and thereby a desired concentrate can be obtained. Furthermore, in case where a suspended solid content is contained in a solution, the suspended solid content forms and maintains a gel structure during the freezing. The suspended solid content is not thawed out at an initial stage, and thus the suspended solid content can be relatively easily separated as well.

More, the thawing step can be expressed by aid of formulae below. That is, with $V_L$: line speed (cm/min) at which ice crystal thaws in a center direction; $V_{melt}$: thawing rate (g/min) of a frozen mass; A: surface area (cm$^2$) of the frozen mass; $\rho$: density of ice (g/cm$^3$) ; W: weight (g) of the frozen mass; and T: time necessary for thawing (min), the thawing rate of the frozen mass and the time necessary for thawing the whole frozen mass, respectively, can be expressed with formulae A and B:

$$V_{melt} = \rho \cdot V_L \cdot A \qquad \text{formula A;}$$

and

$$T = W/(\rho \cdot V_L \cdot A) \qquad \text{formula B.}$$

After studying various operation conditions including a magnitude of the ice, including Examples to be described below, it has been found that when the thawing is carried out at a threshold value of $V_L$ = 0.007 (cm/min) or less, as mentioned above, the high concentration component can be thawed out in an initial stage. Further, it has been also found that at this time, as mentioned above, none of or a little of the suspended solid content is thawed out. When the $V_L$ < 0.007 (cm/min) (formula C) and $\rho$ (density of ice (g/cm$^3$)) are combined with the above formulae A and B, following formulae 1 and 2 can be obtained:

$$V_{melt} < (A/170) \qquad \text{formula 1;}$$

and

$$T > 170 (W/A) \qquad \text{formula 2.}$$

Accordingly, satisfying the formulae 1 and/or 2 with a convenient operation such as controlling the thawing rate can provide a concentrate without consideration of the characteristics such as a composition and a concentration of a solution that is to be frozen. On the basis of the formula 2, in general, the whole frozen mass is thawed over 1 hr or more, preferably over 2 hr or more.

A beginning point and an end point of the time T that is required to thaw, as used herein can be defined as shown below, unless otherwise stated. That is, the beginning point of the thawing is a time when a thawed solution is generated, and the end point is a time when the thawed solution becomes unable to be generated.

In the thawing step according to the present invention, a thawed solution is obtained. When the thawed solution obtained at an initial stage of the thawing step, that is, an initially thawed fraction is recovered, a concentrate of a first component (target component) can be obtained. The term "the initial thawing stage" used herein means a duration until an amount of the first component in the thawed solution becomes 100/4, when an amount of the first component contained in the solution that contains the first component is taken as 100, and/or an initially thawed fraction means a recovered thawed solution in a duration until a concentration thereof becomes 1.3 times or more than a concentration of the first component of the solution having the first component. Further, the process according to the present invention may comprise a second recovering step in which a thawed solution other than the initially thawed fraction is divided into a middle thawed fraction and a finally thawed fraction.

"The middle thawing stage" means a duration when after the initially thawed fraction is recovered, a concentration of the thawed solution becomes substantially the same as that of the first component of the solution containing the first component. Further, the thawed solution of "the final thawing stage" means a thawed solution after the middle thawing stage.

The first recovering step and/or the second recovering step can be carried out by a) monitoring a concentration of the thawed solution and/or b) sampling a given amount thereof. When the a) monitoring is carried out, whether a thawed solution at a certain time point is the initially thawed fraction or not can be instantly determined. On the other hand, when given amounts are sampled and concentrations thereof are investigated, it can be found that first through (n)th fractions, (n+1)th through (m)th fractions (m is a natural number and satisfies m > n+1), and (m+1)th and on fractions, respectively, belong to the initially thawed fraction, middle thawed fraction and finally thawed fraction. The above process is only one example, and the first and/or second process is not restricted thereto.

Furthermore, it is preferable to measure an amount of the first component contained in the solution containing the first component, before freezing. The measurement can be carried out according to various conventionally known processes and does not restricted to a particular one.

The thawing step according to the present invention may further comprise a separating and recovering step of a suspended solid content, in case where the solution having the first component contains the suspended solid content.

In the separating and recovering step, when the suspended solid content and/or thawed solution is generated from the frozen mass, a solid content separator may be placed downstream of the frozen mass. Further, the solid content separator may be disposed before the first recovering step and/or the second recovering step according to which the respective fractions of the thawed solution are recovered by being divided.

Examples of the solid content separator may include, but are not limited to, a filtration apparatus, a filter and a mesh.

When the suspended solid content obtained in the separating and recovering step is subjected to conventionally known physicochemical treatment and/or biological treatment, a substance contained in the suspended solid content, for example, a useful substance can be recovered. The suspended solid content can be obtained by being separated from the thawed solution, that is, dehydrated and reduced in volume; accordingly, a useful substance can be obtained due to a relatively convenient treatment. Examples of the physicochemical treatment and/or biological treatment may include, but are not limited to, further drying, one according to addition of chemical, fermentation and the like.

The process according to the present invention will be more concisely explained. In the process according to the present invention, a frozen mass obtained in the freezing step is placed on a mesh or the like to thaw. A thawed solution generated by thawing goes through a mesh to be a thawed solution. On the other hand, the suspended solid content is also generated during thawing, but the suspended solid content does not go through the mesh. Further, as mentioned above, the suspended solid content is not thawed out or thaws only slightly at the initial thawing stage. Thus, the process according to the present invention can easily remove the suspended solid content. More, of the thawed solution generated during the thawing step of the process according to the present invention, the concentration of the initially thawed fraction is higher than that of the solution containing the first component that is used in the present invention. That is, a concentrate of the first component can be obtained.

The initially thawed fraction, the middle thawed fraction and/or the finally thawed fraction themselves obtained according to the present invention can be used as the solution having the first component. Further, other than the above, when there is a solution containing the first component, the solution, and the initially thawed fraction, the middle thawed fraction and/or the finally thawed fraction are mixed therewith and the mixture can be used as the solution containing the first component. Briefly, when the initially thawed fraction having relatively high concentration as a concentrate is one more times (or more times) concentrated according to the inventive process, a concentrate having higher concentration can be obtained. More, when the middle thawed fraction or the finally thawed fraction, each having relatively low concentration as a concentrate, is concentrated according to the inventive process, a desired concentrate can be obtained. In other words, when the process according to the present invention is carried out in multi-stage, a desired concentrate can be obtained. As mentioned above, as the solid content removing step that is carried out before the freezing step, one set of the process according to the present invention or a plurality of sets including the first set can be cited. In this case, not only one set of the process can remove the solid content but also a plurality of sets can efficiently improve a degree of concentration.

Further, the process according to the present invention may further comprise a step of recovering the first component contained in at least one fraction selected from the initially thawed fraction, the middle thawed fraction and the finally thawed fraction according to the physicochemical process, and/or a step of clarifying the at least one fraction. Briefly, the respective fractions may be concentrated according to the process, and according to conventionally used processes, the fractions may be subjected to concentration, recovery and/or clarification. Examples of the physicochemical process may include, but are not limited to, vaporization, crystallization, membrane separation and electrodialysis.

The thawed latent and sensible heat generated in the thawing step according to the present invention can be used as various energy sources. For example, these may be used even in the respective steps of the process according to the present invention or may be used as another energy source.

The process according to the present invention can be carried out by use of an apparatus as shown below.

An apparatus as one aspect of the present invention comprises a freezing means for quickly freezing a solution to obtain a frozen mass; a thawing means for relatively slowly thawing the whole of the frozen mass; and a first recovering means for recovering an initially thawed fraction obtained at an initial thawing stage, and thereby obtaining a concentrate of a first component.

In the apparatus according to the present invention, upstream of the freezing means, that is, before a solution having a first component is subjected to the freezing means, solid content removing means for removing the solid content from the solution may be placed. The solid content removing means may be centrifugal separation means, filtration means (filtration apparatus such as membrane filter) or chromatography separation means. In case where the apparatus comprises the solid content removing means, a solution, which is obtained by removing part or the whole of the solid content from a solution having the first component, may be subjected to the freezing means. In case where the process described later is regarded as one set, the set is repeated in multi-stage, the solid content may be removed in a first set or in an initial stage containing the first set. Accordingly, examples of the solid content removing means may be the apparatus according to the present invention.

Further, the apparatus according to the present invention may further comprise a separating and recovering means for separating and recovering a suspended solid content contained in the solution from a thawed solution. The separating and recovering means may place the solid content separating means such as a filtration apparatus, a filter and a mesh downstream where the suspended solid content and/or the thawed solution is generated from the frozen mass. The separating and recovering means may be placed downstream of the thawed solution generated by the thawing means and upstream of the first recovering means and/or the second recovering means.

More, the first recovering means may further comprises a second recovering means for recovering a thawed solution other than the initially thawed fraction, by dividing into a middle thawed fraction that has a concentration substantially same as that of the first solution and a finally thawed fraction that has diluted concentration than the first solution. The first recovering means and/or the second recovering means may comprise a) a monitoring means for monitoring a concentration of the thawed solution and/or b) a sampling means for sampling a given amount thereof.

The apparatus according to the present invention, in particular, the thawing means and the first and/or second recovering means of the apparatus according to the present invention can be disposed such that the frozen mass obtained by the freezing means is placed on a transfer means such as a conveyer, and the respective thawed solutions obtained as the transfer means move may be recovered as "the initially thawed fraction", "the middle thawed fraction" and "the finally thawed fraction", respectively, for an early transfer stage, a middle transfer stage and a final transfer stage.

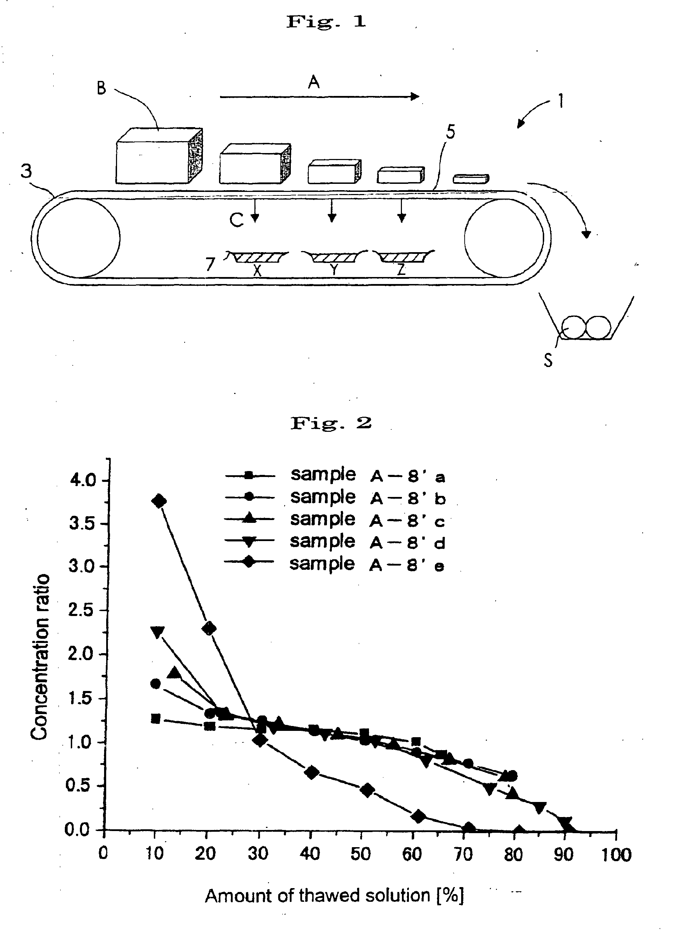

For example, an apparatus 1 having transfer means 3 shown in Fig. 1 can be illustrated. Here, a table 5 of a conveyer 3 corresponding to the transfer means 3 may be made of, for example, a metal mesh. Thawed solutions X, Y and Z may go through meshes and flow vertically downward C. Further, in case where there is a solid content S, the solid content S may be removed through the mesh. More, since the conveyer table is made of a mesh, the apparatus may be designed such that the solid contents may be exhausted from the mesh at a conveyer end point.

In a stage where the thawed solution is obtained, firstly, a frozen mass is placed on the mesh-like conveyer table. Then, the conveyer is moved. A movement speed is preferably synchronized with the thawing rate. That is, when the thawing rate is set at 1 hr, the movement speed is preferably set such that a time may take 1 hr until the thawed solution reaches the end point. A receiving dish 7 may be disposed below the conveyer table. The receiving dish 7 may have a size enough to cover both ends of the conveyer, when both ends of the conveyer are divided in a plurality of pieces. The receiving dishes correspond to the first and/or the second recovering means wherein fractions obtained at a movement initial stage, a movement middle stage and a movement final stage, respectively, are recovered as the initially thawed fraction, the middle thawed fraction and the finally thawed fraction.

The apparatus according to the present invention may further comprise a third recovering means for physicochemically recovering the first component contained in at least one fraction selected from the initially thawed fraction, the middle thawed fraction and the finally thawed fraction, and/or a clarifying means for clarifying the at least one fraction. The physicochemical recovering processes may be at least one selected from a group of vaporization, crystallization, membrane separation and electrodialysis.

The apparatus according to the present invention may further comprise a fourth recovering means for recovering a substance contained in a suspended solid content, for example, a useful substance by physicochemically and/or biologically treating the suspended solid content obtained by the separating and recovering means.

Further, the apparatus according to the present invention may comprise an energy transfer means for making use of the latent heat and sensible heat generated in the thawing means as energy of the apparatus according to the present invention or as another energy source.

EXAMPLES

Hereinafter, the present invention will be illustrated with reference to examples. However, the examples are only exemplifications and do not restrict the present invention.

(Example 1)

As a sample, 5 dm$^3$ of a glucose aqueous solution A-1 of which concentration is adjusted to 10% was used (amount of glucose in the solution: 500 g).

Into each of plastic cylindrical vessels (radius: 4.35 cm, height: 16.8 cm), 1 dm$^3$ of the aqueous solution A-1 was poured, followed by freezing in a home freezer (temperature inside: -20°C) overnight, and thereby five pieces of frozen matter B-1 were obtained.

Five frozen matters B-1 were put into a metal meshed cage (400 mesh) and thawed in a metal tank (temperature: 20°C). A thawed liquid passing through the mesh was recovered from a bottom of the tank. An amount of the thawed liquid was measured by a flowmeter. Further, a concentration of glucose that is a target component to be enriched was measured by a refractometer.

A thawing time was 13 hr 10 minutes, and a thawing rate was 6.3 g/min.

The glucose concentration was monitored by the refractometer. When the glucose concentration of the thawed liquid became 26.2%, 500 cm$^3$ (amount of glucose: 131 g) was sampled as an initial fraction X-1. Further, when the glucose concentration of the thawed liquid after the initial fraction X-1 became 15.9%, 1000 cm$^3$ (amount of glucose: 159 g) was sampled as a middle fraction Y-1. The residue was taken as a final fraction Z-1 (glucose concentration: 5.1%, amount of glucose: 128 g).

It is found that the initial fraction X-1 has the glucose concentration of 26.2% and is concentrated substantially 2.6 times compared with the concentration of 10% of the aqueous solution A-1.

(Example 2)

The aqueous solution A-1 same as example 1 was used. However, in the freezing, frozen matters B-2 were obtained in size different from that of example 1. That is, the aqueous solution A-1 was poured into a plastic home ice tray, followed by freezing in a home freezer (temperature inside: -20°C) overnight, and thereby 400 pieces of rectangular parallelepiped (2.0 cm × 2.5 cm × 2.5 cm) frozen matter B-2 were obtained.

Four hundreds pieces of frozen matter B-2 were put into a meshed cage (400 mesh) and thawed in a metal tank (temperature: 20°C). A thawed liquid passing through the mesh was recovered from a bottom of the tank. An amount of the thawed liquid was measured by a flowmeter. Further, a concentration of glucose that is a target component to be concentrated was measured by a refractometer.

A thawing time was 15 hr 10 minutes and a thawing rate was 5.5 g/min.

The glucose concentration was monitored by the refractometer. When the glucose concentration of the thawed liquid became 33.6%, 500 cm$^3$ (amount of glucose: 168 g) was sampled as an initial fraction X-2. Further, when the glucose concentration of the thawed liquid after the initial fraction X-2 became 16.5%, 820 cm$^3$ (amount of glucose: 135.3 g) was sampled as a middle fraction Y-2. The residue was taken as a final fraction Z-2 (glucose concentration: 3.3%, amount of glucose: 88.6 g).

It is found that the initial fraction X-2 has the glucose concentration of 33.6% and is concentrated substantially 3.4 times compared with the concentration of 10% of the aqueous solution A-1.

Further, when compared with example 1, it is found that using the thawing rate and thawing time according to the present invention can provide a concentrate neverthelss the frozen matters are different in size.

(Example 3)

As a sample, 5 dm$^3$ of a saccharified liquid A-3 made from kitchen garbage was used. The saccharified liquid A-3 was prepared in such a manner that to kitchen garbage having a standard composition consisting of 43% of carbohydrate, 38% of vegetables and fruits and 19% of protein, an equal amount of water was added, and amylase was added thereto to saccharify for 6 hr. An amount of glucose that is a target component in 5 dm$^3$ of the saccharified liquid was measured by a refractometer and found to be 830 g (concentration: 16.6%).

Each 1 dm$^3$ of 5 dm$^3$ of the saccharified liquid A-3 was poured into a plastic cylindrical vessel, followed by freezing in a home freezer (temperature inside: -20°C) overnight, and thereby 5 pieces of cylindrical frozen matter having a surface area of 2850 cm$^2$ were obtained.

Five pieces of the cylindrical frozen matter were put into a metal meshed cage (400 mesh) and thawed in a metal tank (temperature: 20°C). A thawing time was 12 hr and a thawing rate was 6.9 g/min. A thawed liquid passing through the mesh was recovered from a bottom of the tank. An amount of the thawed liquid was measured by a flowmeter. Furthermore, a concentration of glucose that is a target component was measured by a refractometer.

The glucose concentration was monitored by the refractometer. When the glucose concentration of the thawed liquid became 38%, 1000 cm$^3$ (amount of glucose: 380 g) was sampled as an initial fraction x-3. Further, when the glucose concentration of the thawed liquid after the initial fraction X-3 became 24.2%, 1000 cm$^3$ (amount of glucose: 242 g) was sampled as a middle fraction Y-3. The residue was taken as a final fraction Z-3 (glucose concentration: 6.3%, amount of glucose: 189 g).

Since the initial fraction X-3 has the glucose concentration of 38%, it is found that the concentration of the aqueous solution A-3, 16.6%, was concentrated substantially 2.3 times.

(Example 4)

A process according to the present invention of obtaining a concentrate was carried out by using the initial fraction X-3 and middle fraction Y-3 obtained in example 3 as a solution containing sugar that is a target component.

That is, 2 dm$^3$ (amount of glucose: 622 g, glucose concentration: 31.1%) of a glucose aqueous solution A-4 was used as a sample.

Each 1 dm$^3$ of 2 dm$^3$ of the liquid A-4 was poured into a plastic cylindrical vessel, followed by freezing in a home freezer (temperature inside: -20°C) overnight, and thereby 2 pieces of cylindrical frozen matter each having a surface area of 570 cm$^2$ were obtained.

Two pieces of the cylindrical frozen matter were put into a metal meshed cage (400 mesh) and thawed in a metal tank (temperature: 20°C). A thawing time was 7 hr 20 min and a thawing rate was 4.5 g/min. A thawed liquid passing through the mesh was recovered from a bottom of the tank. An amount of the thawed liquid was measured by a flowmeter. Further, a concentration of glucose that is a target component was measured by a refractometer.

The glucose concentration was monitored by the refractometer. When the glucose concentration of the thawed liquid became 52.7%, 400 cm$^3$ (amount of glucose: 210 g) was sampled as an initial fraction X-4. Further, when the glucose concentration of the thawed liquid after the initial fraction X-4 became 45.9%, 400 cm$^3$ (amount of glucose: 184 g) was sampled as a middle fraction Y-4. The residue was taken as a final fraction Z-4 (glucose concentration: 17.1%, amount of glucose: 205 g).

Since the initial fraction X-4 has the glucose concentration of 52.7%, it is found that the initial fraction X-4 is concentrated substantially 1.7 times compared with the concentration of 31.1% of the liquid A-4. Further, it is found that the glucose concentration of X-4, that is, 52.7% is concentrated 3.17 times compared with the concentration of 16.6% of the liquid A-3. Accordingly, it is found that when the process according to the present invention is carried out in multi-stage, one can obtain a concentrate of which concentration is more concentrated more than that obtained by concentrating once.

(Example 5)

As a sample, 1 dm$^3$ of a glucose aqueous solution A-5 of which concentration is adjusted to 10% was used. An amount of glucose that is a target component in the aqueous solution A-5 was 100 g.

The aqueous solution A-5 was poured into a plastic cylindrical vessel, followed by freezing in a home freezer (temperature inside: -20°C) overnight.

After the freezing, a frozen matter was taken out and ground to fine sherbet-like ones (average particle diameter of ice crystals: 700 μm) (B-5), followed by putting into a metal meshed cage (400 mesh) to thaw in a metal tank (temperature: 20°C). A thawed liquid passing through the mesh was recovered from a bottom of the tank. An amount of the thawed liquid was measured by a flowmeter. Further, a concentration of glucose that is a target component was measured by a refractometer.

A thawing time was 7 hr and a thawing rate was 2.4 g/min.

When it is assumed that the sherbet-like frozen matter is made of spheres each of which has a diameter of 700 μm, a total of 1 dm$^3$ can be calculated as having a total surface area corresponding to 85520 cm$^2$. When this is inserted in the formulae 1 and 2, the thawing rate of 503 g/min or less and thawing time of 2 min or more are obtained, and the above thawing time and thawing rate satisfied these.

A thawed liquid was sampled divided into an initially thawed fraction X-5, a middle thawed fraction Y-5 and a finally thawed fraction Z-5. Each of these was monitored of a concentration of glucose that is a target component and an amount of thawed liquid. Thereby, the thawed liquid was sampled so that the initially thawed fraction X-5 and the middle thawed fraction Y-5, respectively, may have concentrations of glucose of 23.6% (amount of glucose: 47.2 g) and 11.9% (amount of glucose: 35.6 g), and one after that may be the finally thawed fraction Z-5 (concentration of glucose: 1.4%, amount of glucose: 6.8 g).

Thus, since the concentration of sugar of the initially thawed fraction X-5 is 23.6%, it is found that the initially thawed fraction X-5 was concentrated substantially 2.4 times in comparison with a concentration of 10% before the concentration.

(Example 6)

As a sample, 200 g of palm oil mill effluent A-6 was used. As a target component, a salt content (in terms of NaCl) contained in the effluent A-6 was adopted. An amount thereof was measured and found to be 4.6 g (concentration: 2.3%). Further, the effluent A-6 contained 8.34 g of a total solid content.

The effluent A-6 was poured into a home ice tray, followed by freezing in a home freezer (temperature inside: -20°C) overnight, and thereby 16 pieces of rectangular parallelepiped (2.0 cm × 2.5 cm × 2.5 cm) frozen matter B-6 were obtained.

16 pieces of obtained frozen matter B-6 were put into a metal meshed cage (400 mesh) and thawed in a metal tank (25°C). A thawing time was 2 hr 52 min and a thawing rate was 1.2 g/min.

A thawed liquid passing through the mesh was recovered from a bottom of the tank. An amount of the thawed liquid was measured by a flowmeter. Furthermore, a concentration of a salt content (in terms of NaCl) that is a target component was measured by a conductance meter.

A concentration of the salt content in a thawed liquid recovered from a bottom of the tank was monitored by the conductance meter and an amount of the thawed liquid was monitored. Thereby, the concentration of salt content of an initial fraction X-6 and that of a middle fraction, respectively, were made so as to be 3.1% (amount of salt content: 2.48 g) and 2.4% (amount of salt content: 1.44 g), and the residue was taken as a final fraction Z-6 (concentration of salt content: 1.3%, amount of salt content: 0.36 g).

Further, during the thawing, in the meshed cage, the solid content was held, and after completion of the thawing, 8.07 g of the solid content could be recovered and exhausted. That is, 96.8% of 8.34 g of the total solid content in the effluent A-6, could be removed.

The initially thawed fraction X-6 has the concentration of salt content of 3.1%; accordingly, it is found that when compared with that of the effluent A-6, that is, 2.3%, the initial fraction was concentrated 1.3 times. Further, the initially thawed fraction X-6 was removed of the solid content.

(Example 7)

As a sample, 200 g of vegetable juice A-7 was used. An amount of sugar that is a target component that is to be concentrated in the juice A-7 was measured by a refractometer and found to be 7.6 g (concentration: 3.8%).

The juice A-7 was poured into a home ice tray, followed by freezing in a home freezer at -20°C overnight, and thereby 16 pieces of rectangular parallelepiped (2.0 cm × 2.5 cm × 2.5 cm) frozen matter B-7 were obtained.

Sixteen pieces of frozen matter B-7 were put into a meshed cage (400 mesh) and thawed in a metal tank at a temperature of 20°C. A thawing time was 1 hr 50 min and a thawing rate was 1.8 g/min. A thawed liquid passing through the mesh was recovered from a bottom of the tank. An amount of the thawed liquid was measured by a flowmeter. Further, a concentration of sugar that is a target component was measured by a refractometer.

The thawed liquid recovered from a bottom of the tank was monitored of a concentration of sugar by the refractometer and an amount of the liquid. Thereby, the concentration of sugar of an initial fraction X-7 and that of a middle fraction Y-7, respectively, were made so as to be 6.2% (amount of sugar: 3.6 g) and 3.1% (amount of sugar: 1.3 g), and the residue was taken as a final fraction Z-7 (concentration of sugar: 1.1%, amount of sugar: 0.88 g).

Further, during the thawing, in the meshed cage, the solid content was held, and after completion of the thawing, the solid content could be recovered and exhausted.

The initially thawed fraction X-7 has the sugar concentration of 6.2%. Accordingly, it is found that in comparison with the concentration of sugar, 3.8%, of the vegetable juice A-7, the initial fraction was concentrated substantially 1.6 times. Further, from the initially thawed fraction X-7, the solid content contained in the vegetable juice A-7 was removed.

(Example 8)

As a sample, barley shochu waste liquid A-8 available from a shochu manufacturer located in Takachiho-Machi, Miyazaki Prefecture was used. Firstly, the shochu waste liquid A-8 was subjected to centrifugal separation to remove a solid content B-8, and thereby solid content free-barley shochu waste liquid A-8' was obtained. The solid content B-8 was returned to the barley shochu waste liquid A-8' so that a concentration of the solid content may be twice that of the barley shochw waste liquid A-8 (A-8'a), equal to that of the barley shochu waste liquid A-8 (A-8'b), one half-times that of the barley shochu waste liquid A-8 (A-8'c), one quarter-times that of the barley shochu waste liquid A-8 (A-8'd), and free from the solid content (A-8'e), and thereby samples A-8'a through A-8'e were prepared.

Thereafter, each of the samples A-8'a through A-8'e was poured into a plastic cylindrical vessel having a capacity of 1 L, followed by freezing in a home refrigerator at -18°C overnight, and thereby frozen matters of the respective samples were obtained. The respective frozen matters of the samples A-8'a through A-8'e were thawed on a mesh having a side of 1.5 mm under a room temperature condition, and equal amounts of thawed liquids were sampled. A concentration of sugar of the thawed liquids each was measured by a portable refractometer.

In Fig. 2, measurement results of sugar concentration of the respective thawed liquids of samples A-8'a through A-8'e are shown. In a vertical axis of Fig. 2, the values of plotted as "concentration ratio" which was normalized by the sugar concentration ratio against 1 (the sugar concentration of the respective samples before the freezing were all the same), when the sugar concentration of the respective samples before the freezing was designated as 1.

From Fig. 2, it is observed that as the solid content becomes scarce, the concentration ratio tends to be higher. On the other hand, it is found that when the solid content is much, the concentration ratio is low; that is, the concentration becomes difficult. Accordingly, from the present Example, it is found that when before a freezing step a solid content removing step is disposed, a concentrate having higher concentration ratio (higher concentration) can be obtained.

Further, it is confirmed that according to the freezing and thawing process according to the present invention, the solid content also can be removed. That is, the shochu waste liquid A-9 that has the suspended solid content of 21,000 ppm is frozen, and thereby a frozen matter can be obtained. When the frozen matter was thawed on a mesh, the solid content remained on the mesh, and a concentration of the suspended solid content of the thawed liquid X-9 passing through the mesh was 3750 ppm. Further, when the liquid was settled for 12 hr and a supernatant liquid was recovered, a concentration of the solid content thereof was 225 ppm. Accordingly, it was confirmed that when a simple operation of "freezing and thawing" → "precipitation" is applied, the concentration of the solid content of a decanted liquid X-9' of the thawed liquid X-9 can be reduced to substantially 1/100 of that of the shochu waste liquid A-9.

INDUSTRIAL APPLICABILITY

The present invention can be applied to the food industry, the environmental industry, the pharmaceutical industry, the chemical industry, and the like.

**Claims**

1. A process for producing a concentrate in which the concentrate of a first component is obtained from a solution containing the first component, comprising:

    a freezing step of quickly freezing the solution to obtain a frozen mass;
    a thawing step of thawing the whole of the frozen mass at a thawing rate $V_{melt}$ (g/min) that satisfies the following formula 1 (wherein A means a surface area (cm$^2$) of the frozen mass); and

a first recovering step of recovering an initially thawed fraction obtained at an initial thawing stage, thereby to obtain the concentrate of the first component:

$$(A/170) > V_{melt} \qquad \text{Formula 1.}$$

2. A process for producing a concentrate in which the concentrate of a first component is obtained from a solution containing the first component, comprising:

    a freezing step of quickly freezing the solution to obtain a frozen mass;
    a thawing step of thawing the whole of the frozen mass during a time T (min) that satisfies the following formula 2 (wherein A means a surface area (cm$^2$) of the frozen mass and W means a weight (g) of the frozen mass); and
    a first recovering step of recovering an initially thawed fraction obtained at an initial thawing stage, thereby to obtain the concentrate of the first component:

$$T > 170(W/A) \qquad \text{Formula 2.}$$

3. A process for producing a concentrate in which the concentrate of a first component is obtained from a solution containing the first component, comprising:

    a freezing step of quickly freezing the solution to obtain a frozen mass;
    a thawing step of thawing the whole of the frozen mass over 1 hr or more; and
    a first recovering step of recovering an initially thawed fraction obtained at an initial thawing stage, thereby to obtain the concentrate of the first component.

4. The process according to any one of claims 1 to 3, further comprising, before the freezing step, a solid content removing step of removing a solid content from the solution.

5. The process according to any one of claims 1 to 4, further comprising a second recovering step of dividing a thawed solution other than the initially thawed fraction into a middle thawed fraction that has a concentration substantially same as that of the first solution and a finally thawed fraction that is diluted more than the first solution and thereby to recover.

6. The process according to any one of claims 1 to 5, wherein the first recovering step and/or the second recovering step are carried out by a) monitoring a concentration of a thawed solution and/or b) sampling a given amount thereof.

7. The process according to any one of claims 1 to 6, wherein the initially thawed fraction, the middle thawed fraction and/or the finally thawed fraction is used as a solution containing the first component.

8. The process according to any one of claims 1 to 7, further comprising a step of recovering the first component contained in at least one fraction selected from the initially thawed fraction, the middle thawed fraction and the finally thawed fraction through a physicochemical means and/or a step of clarifying the at least one fraction.

9. The process according to claim 8, wherein the physicochemical means are at least one process selected from the group consisting of vaporization, crystallization, membrane separation and electrodialysis.

10. The process according to any one of claims 1 to 9, further comprising a separating and recovering step of, separating and recovering a suspended solid content contained in the solution from a thawed solution during and/or after the thawing step.

11. The process according to claim 10, wherein a solid content separator is placed downstream where the suspended solid content and/or the thawed solution is generated from the frozen mass, in the separating and recovering step.

12. The process according to claim 10 or 11, further comprising a step of physicochemically treating and/or biologically treating the suspended solid content obtained in the separating and recovering step to recover a substance contained in the suspended solid content.

13. The producing process according to any one of claims 1 to 12, wherein a latent heat and/or sensible heat generated in the thawing step is utilized as energy for the process according to any one of claims 1 to 12 or another energy source.

14. A concentrate of a first component produced by the process according to any one of claims 1 to 13.

15. A concentrate producing apparatus for obtaining a concentrate of a first component from a solution containing a first component, comprising:

a freezing means for quickly freezing the solution to obtain a frozen mass;
a thawing means for thawing the whole of the frozen mass at a thawing rate $V_{melt}$ (g/min) that satisfies the following formula 1 (wherein A means a surface area (cm$^2$) of the frozen mass); and
a first recovering means for recovering an initially thawed fraction that is obtained at an initial thawing stage, and thereby obtaining a concentrate of the first component:

$$(A/170) > V_{melt} \qquad \text{Formula 1.}$$

16. A concentrate producing apparatus for obtaining a concentrate of a first component from a solution containing the first component, comprising:

a freezing means for quickly freezing the solution to obtain a frozen mass;
a thawing means for thawing the whole of the frozen mass within a time T (min) that satisfies the following formula 2 (wherein A means a surface area (cm$^2$) of the frozen mass and W means a weight (g) of the frozen mass); and
a first recovering means for recovering an initially thawed fraction that is obtained at an initial thawing stage, and thereby obtaining a concentrate of the first component:

$$T > 170(W/A) \qquad \text{Formula 2.}$$

17. A concentrate producing apparatus for obtaining a concentrate of a first component from a solution containing the first component, comprising:

a freezing means for quickly freezing the solution to obtain a frozen mass;
a thawing means for thawing the whole of the frozen mass over 1 hr or more; and
a first recovering means for recovering an initially thawed fraction that is obtained at an initial thawing stage, and thereby obtaining a concentrate of the first component.

# Fig. 1

# Fig. 2

## INTERNATIONAL SEARCH REPORT

| | International application No. |
|---|---|
| | PCT/JP03/01903 |

### A. CLASSIFICATION OF SUBJECT MATTER
Int.Cl$^7$  B01D9/04, C13F1/00

According to International Patent Classification (IPC) or to both national classification and IPC

### B. FIELDS SEARCHED
Minimum documentation searched (classification system followed by classification symbols)
Int.Cl$^7$  B01D9/04, C13F1/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
WPI

### C. DOCUMENTS CONSIDERED TO BE RELEVANT

| Category* | Citation of document, with indication, where appropriate, of the relevant passages | Relevant to claim No. |
|---|---|---|
| Y<br>A | JP 56-139103 A  (Yoshio AOYAMA),<br>30 October, 1981 (30.10.81),<br>Claims; page 3, upper left column, line 11 to<br>page 4, upper left column, line 14<br>(Family: none) | 3,4,13,14,17<br>1,2,5-12,15,<br>16 |
| Y<br>A | JP 2-191508 A  (Toyo Engineering Works, Ltd.),<br>27 July, 1990 (27.07.90),<br>Claims; page 2, upper right column, line 9 to<br>page 3, upper right column, line 6<br>(Family: none) | 3,4,13,14,17<br>1,2,5-12,15,<br>16 |
| Y<br>A | JP 61-263601 A  (Kyoei Seicha Kabushiki Kaisha),<br>21 November, 1986 (21.11.86),<br>Claims; page 2, lower left column, line 1 to<br>page 3, upper left column, line 6<br>(Family: none) | 3,4,13,14,17<br>1,2,5-12,15,<br>16 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 May, 2003 (01.05.03) | 20 May, 2003 (20.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/01903 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2002-172301 A  (Hiroshi OKA),<br>18 June, 2002 (18.06.02),<br>Claims; page 2, right column, Par. No. [0009] to<br>page 3, right column, Par. No. [0019]<br>(Family: none) | 1-17 |

Form PCT/ISA/210 (continuation of second sheet) (July 1998)